# EUROPEAN PATENT SPECIFICATION

(11) **EP 1 990 220 B1**
(45) Date of publication and mention of the grant of the patent: **14.07.2010**
(21) Application number: 08155666.4
(22) Date of filing: 06.05.2008
(51) Int. Cl.: B60D 1/04, A01B 59/00

(54) **Coupling hook particularly for the lower arms of a three-point linkage of a tractor**
Kopplungshaken, besonders für die unteren Arme einer Dreipunktverbindung eines Traktors
Crochet de couplage en particulier pour les bras inférieurs d'une liaison de tracteur en trois points

(30) Priority: 10.05.2007 FI 20075340
(43) Date of publication of application: 12.11.2008
(73) Proprietor: LH Lift Oy, 41370 Kuusa (FI)
(72) Inventor: Viikki, Paavo, 41370 Kuusa (FI); Viikki, Timo, 41370 Kuusa (FI); Kumpukallio, Pekka, 41370 Kuusa (FI); Puustinen, Sami, 40340 Jyväskylä (FI)
(74) Representative: Helke, Kimmo Kalervo

(56) References cited:
- DE-B1- 2 414 441
- DE-B1- 2 456 971
- FR-A- 2 444 396

## Description

The present invention relates to a coupling hook particularly for the lower arms of a three-point linkage of a tractor, which is intended to attach an implement to a tractor by means of a coupling ball or similar, which coupling hook includes
- a body, in which there is a housing for a catch mechanism and a coupling throat arranged to receive particularly the said coupling ball;
- a catch rotating around a fixed pin in the housing, the end of which catch protrudes out of the housing into the coupling throat, in order to lock the coupling ball into the coupling throat, whereas in the free position it can rotate, thus permitting the coupling ball to rise out of the coupling throat;
- an operating lever operating the catch, for moving the catch from the retention position to the free position and back again, and in which retention position the operating lever prevents the catch from rotating out of the coupling throat.

A quick-release coupling for a tractor's three-point linkage has been under development for a long time already. Generally, coupling balls, to which the tractor's upper arms and lower arms are connected, installed in the implement to be coupled, are used in a quick-release coupling. The ends of the upper arms and lower arms incorporate special coupling hooks for the quick-release coupling.

In the solutions described, the operating lever must be returned manually to the locking position, before the hook can receive and lock the coupling ball. The driver must therefore get up from the driver's seat for this purpose. If the operating lever remains raised, there is then a danger that it will be broken when the hook strikes the drawbar.

Publications DE 2414441, (disclosing all features of the preamble of claim 1)DE 3928699, and US 5050684 (Jean Walterscheid Gmbh), as well as GB 2 192 122 (GKN Sankey Ltd) disclose coupling hooks, in each of which a catch is pivoted to rotate. The catch is operated by an operating lever, which moves the catch from the locking position to the free position and back. In order for the coupling ball to rise out of the housing, the operating lever must be placed on top of a support arranged in the housing, as otherwise the spring would pull or push the catch back to the locking position. The operator goes to raise the operating lever from the locking position to the free position, so that the coupling ball of the implement can rise out of the coupling throat. As such, the operation of these coupling hooks is quite conventional, as is the fact that a safety problem arises if the operator forgets to raise the operating lever out of the locking position after lifting. Should the operator then lift the implement back into the hook, the catch will not lock at all. This immediately creates a hazardous situation.

Of course, the coupling hook should keep the implement locked even under considerable stress. Ease of use cannot be created at the cost of reliability.

The present invention is intended to create a new type of coupling-hook mechanism, particularly for the lower arm of a three-point linkage of a tractor, which is reliable and the operation of which is easy and natural, and by means of which the said hazardous situation can be avoided. The characteristic features of the coupling hook according to the invention are stated in the accompanying Claim 1. The coupling hook according to the invention differs from known coupling hooks particularly in that the catch mechanism returns automatically to the locking state if the coupling ball is raised. The coupling hood is able to receive the coupling ball, after which the locking is in effect.

In the following, the invention is examined in detail with reference to the accompanying drawings showing some embodiments of the invention, in which
- Figure 1a: In the locking position, the locking catch transmits the lifting force, acting on the ball, to the pull catch and from there to two tubular pins.
- Figure 1b: The pull catch has been raised and locked on top of the lower tubular pin. The locking catch is then free to rotate.
- Figure 1c: When an implement is uncoupled, the locking catch rotates and automatically releases the pulling catch from the lock of the upper position.
- Figure Id: The implement has been completely detached form the hook and both the pull catch and the locking catch are in the lower position.
- Figure 1e: When an implement is coupled, the locking catch causes the pull catch to rise by an amount that is greatest immediately before the locking catch locks.
- Figures 2a - 2b: A second embodiment, equipped with an operating device operating the operating lever.

In the figures, the coupling hook according to the invention is shown without a cover, which in the final product is welded onto the coupling hook. In addition, the coupling hook (Category 3, ISO 11001) is shown slightly smaller than in reality.

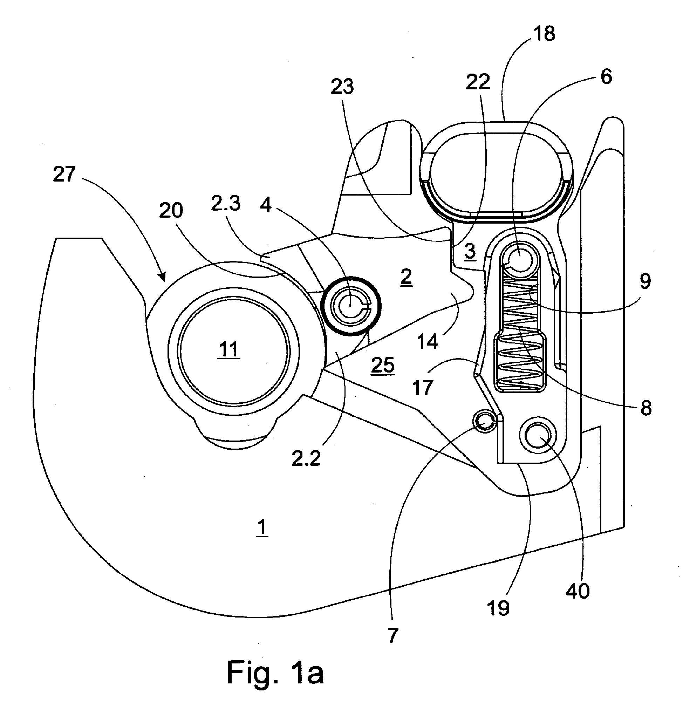

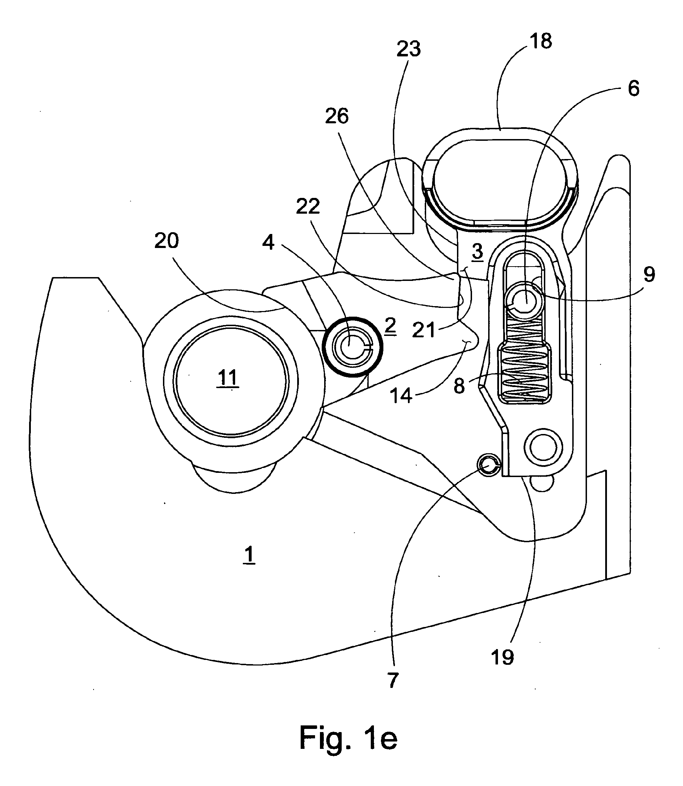

The coupling hook itself is also attached to the lower arm by welding. The coupling hook includes a body 1, in which there is a coupling throat 27 and a housing 25, Figure 1a. The operating mechanism of the catch 2 is mainly in the housing 25. The coupling throat 27 is conventional and is arranged particularly to receive the coupling ball 11. Usually the coupling ball is installed permanently in the implement, or is fitted to a conventional three-point-coupling pin. As such, a quick coupling can be made even without a coupling ball, which is, however, not to be recommended. In addition, with the aid of the coupling ball possible small differences of angle between the pin and the lower arm can be eliminated. In the figures, the coupling ball is marked with the reference number 11.

The housing 25, to which the catch 2 together with its operating mechanism is fitted, is formed in the coupling hook, which is manufactured as a forged piece. The catch 2 is pivoted in the housing 25 with the aid of a pin 4. The pin 4 is a very asymmetrical position close to the coupling throat 27. The catch 2 extends far inside the housing and always seeks to rotate with the aid of gravity to receive the coupling ball, i.e. its end next to the housing tends to drop downwards. In the position of Figure 1a, the upper lobe 2.3 of the catch 2 protrudes from the opening of the housing 25 on top of the coupling ball 11 and prevents the coupling ball 11 from rising out of the coupling throat 27, if the rotation of the catch 2 is prevented.

According to Figure 1a, the counter surface 23 of the operating lever prevents the surface 22 of the catch 2 from moving and rotating, thus fully ensuring the retention of the coupling ball 11 in its coupling throat. The counter surface 23 receives the force and the operating lever 3 transmits it to the pin 6 of the housing. The support surface 20 of the catch 2 on the coupling ball 11 side covers 60 - 120°, preferably 80 - 100° of the circumference of the coupling ball 11.

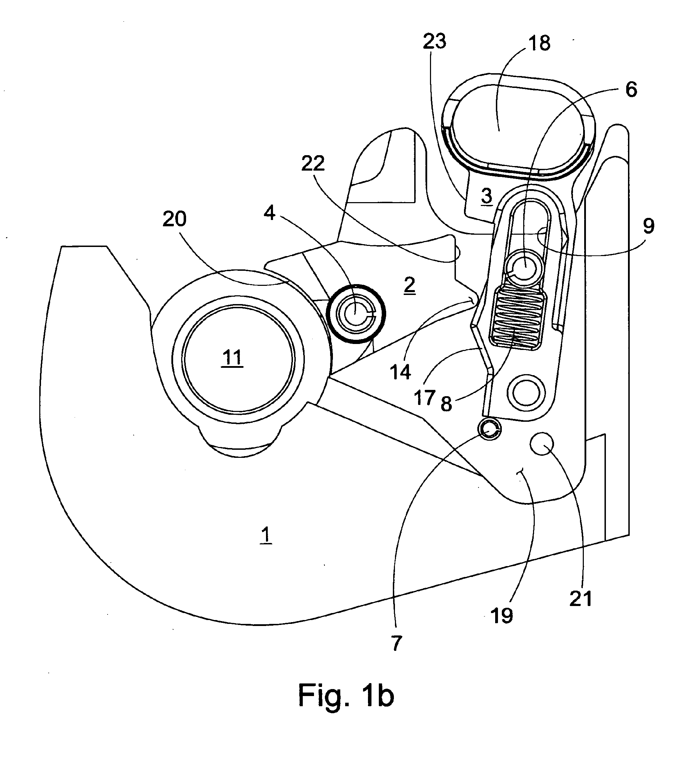

Being restricted by the pin 6 and the slot 9, the operating lever 3 can move in different directions in the housing, except that in its lower position the pin 7 restricts its area of movement. The compression spring 9 seeks to push the operating lever downwards to the locking position, unless it is lifted on top of the pin 7 according to Figure 1b.

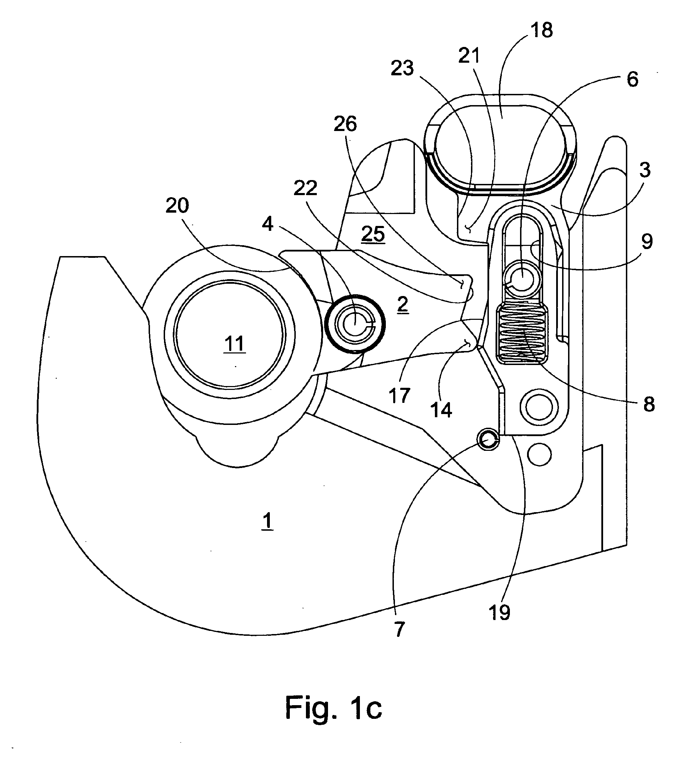

According to Figure 1b, when the operating lever 3 is lifted off the lower surface 19 on top of the pin 7, the catch 2 can now rotate freely and the ball can rise out of the coupling throat. However, it should be noted that, when the catch rotates, the lobe 14 of the catch immediately begins to push on the surface 17 and thus push the operating lever 3 off the pin 7. Once that surface 19 of the catch 2 finally slides off the top of the pin 7 (Figure 1c), the operating lever 3 drops downwards with the aid of the spring 8 and gravity, until the lobe 21 of the operating lever 3 meets the lobe 26 (not shown) of the catch 2. As the catch rotates, it continues to drop, until the pin 6 is at the upper end of the slot 9.

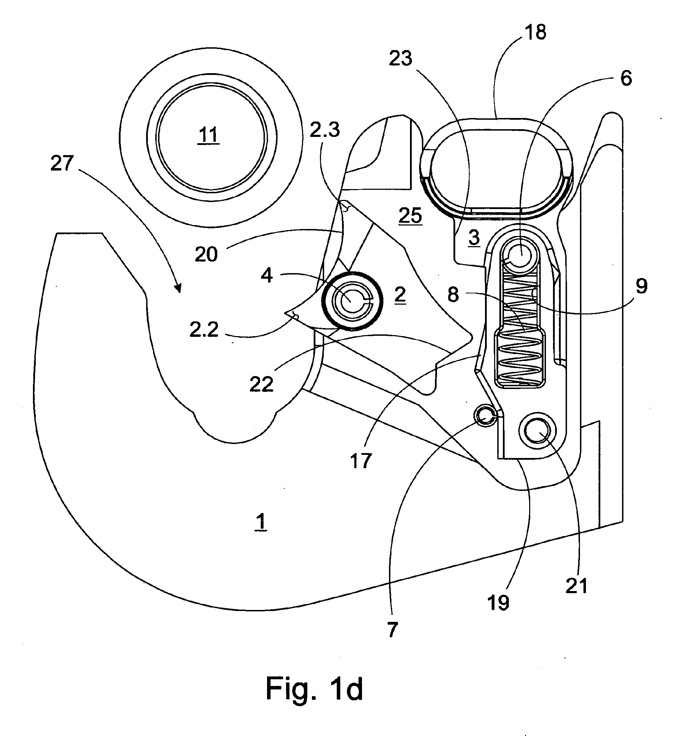

Once the coupling ball 11 is removed entirely, Figure 1d, the hook remains in a state in which the operating lever 3 is ready in the locking position, but the catch 2 is ready to receive a coupling ball. As it drops, this rotates the catch 2, which with the aid of the lobe 26 lifts the operating lever 3 by the lobe 21 sufficiently for the said surfaces 23 and 22 to move to face each other. As the coupling ball drops, the result is again the state according to Figure 1a, in which no amount of loading of the coupling ball 11 will open the catch mechanism.

Once the ball is in the ball housing of the hook, the locking catch is locked by the pull catch, i.e. it cannot rotate, despite the force acting on the ball.

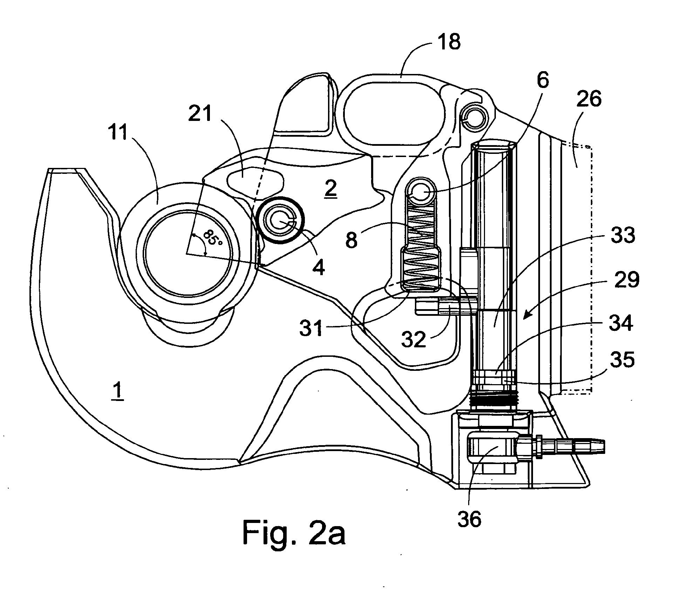

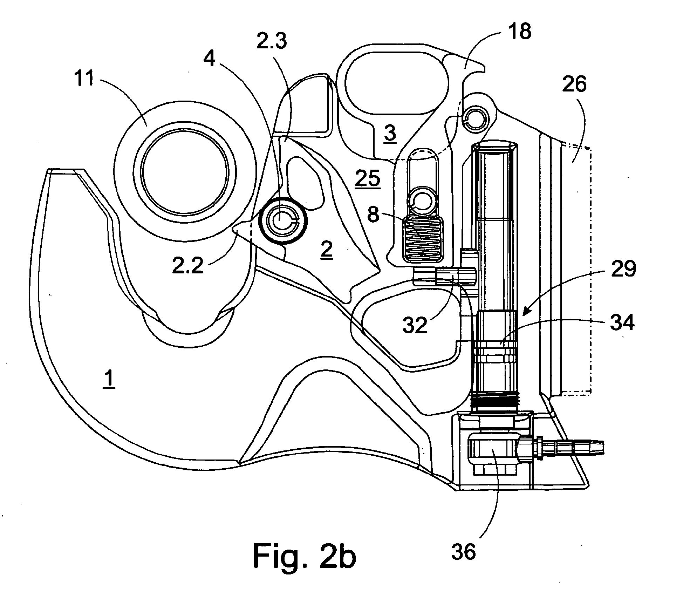

In Figures 2a, 2b and 2c, the catch mechanism itself is otherwise the same as in the above, except that the coupling hook is equipped with a hydraulic operating device 29, which in this case is installed in a vertically drilled hole in the arm. The same reference numbers as above are used for components that are functionally similar. In these figures, the end of the lower arm 26 is shown by broken lines. The weight distribution of the catch 2 is further emphasized by means of a recess 2.1, by means of which the weight is reduced on the coupling-throat side. According to the figure, the catch 2 weighs 200 g in a coupling hook according to Category 3 (coupling ball D = 64 mm). The diameter of the pin 14 is 12 mm and the moment measured from the catch 0,02 Nm, i.e. relative to its weight (200 g) 0,1 Nm/kg. This value should generally be 0,03 - 0,3, preferably in the range 0,06 - 0,15 Nm/kg, so that the catch 2 will rotate reliably with the aid of gravity. Naturally, the catch can be equipped with a spring to rotate it, which will, however, complicate the construction.

The operating lever 3 can move vertically in the slot 9 guided by the pin 6. In this case, the operating device 29 is hydraulic and has a piston 34, which is sealed in a cylinder by means of a ring seal 35. The hydraulic pressure is brought to the connector 36. The piston rod 33 drives a pin 32, which in turn drives the lower fork 31 of the operating lever. There is a horizontally drilled hole in the rod for the pin 32. According to Figures 2a and 2b, the operating lever 3 raised by the operating device 29 does not prevent the catch 2 from rotating and the locking opening. Thus the coupling ball can rise out of the throat. When the pin 32 raising the operating lever 3 is lowered (not shown), the mechanism again remains automatically in the locking state to receive the coupling ball 11.

## Claims

1. Coupling hook, which is intended to attach an implement to a tractor by means of a coupling ball (11) or similar, which coupling hook includes
- a body (1), in which there is a housing (25) for a catch mechanism and a coupling throat (27) arranged to receive particularly the said coupling ball (11);
- a catch (2) rotating around a fixed pin (4) in the housing (25), the end of which catch protrudes out of the housing (25) to the coupling throat (27), in order to lock the coupling ball (11) into the coupling throat (27), whereas in the free position the catch (2) can rotate, thus permitting the coupling ball (11) to rise out of the coupling throat (27);
- an operating lever (3) operating the catch (2), for moving the catch (2) from the retention position to the free position and back again, and in which retention position the operating lever (3) prevents the catch (2) from rotating out of the coupling throat,
**characterized in that** the catch (2) is arranged to return the operating lever (3) to the locking position, when the coupling ball (11) rotates the catch as the coupling ball rises out of the coupling throat (27).

2. Coupling hook according to Claim 1, **characterized in that** the operating lever (3) includes a counter surface (23) and the catch (2) a locking surface (22), which are arranged to lock the catch (2) when the operating lever (3) is in the locking position.

3. Coupling hook according to Claim 1 or 2, **characterized in that** the catch (2) includes a guide lobe (26) contacting an auxiliary lobe (21) of the operating lever (3) for holding it up at the start of the return movement, before the catch (2) has rotated to close to its locking position, after having received the coupling ball (11).

4. Coupling hook according to Claim 3, **characterized in that** the auxiliary lobe (21) of the operating lever is formed in connection with the counter surface (23).

5. Coupling hook according to any of Claims 1 - 4, **characterized in that** the catch (2) is pivoted on one side, so that it will try to open with the aid of gravity.

6. Coupling hook according to Claim 5, **characterized in that** the pivot (4) carrying the catch (2) is at the end of the coupling ball (11) side, while the opposite end extends asymmetrically deep inside the housing (25).

7. Coupling hook according to Claim 5 or 6, **characterized in that** the support surface (20) of the catch (2) on the coupling ball (11) side covers 60 - 120°, preferably 80 - 100° of the circumference of the coupling ball (11).

## Patentansprüche

1. Zum Befestigen eines Geräts über eine Kupplungskugel (11) oder dergleichen an einen Traktor bestimmter Fanghaken, der
- einen Hakenkörper (1) mit einem Gehäuse (25) für den Verriegelungsmechanismus und ein Kupplungsmaul (27) zur Aufnahme speziell der besagten Kupplungskugel (11),
- in dem Gehäuse (25) ein um einen feststehenden Bolzen (4) drehbares Sperrglied (2), dessen Ende sich zum Verriegeln der Kupplungskugel (11) im Kupplungsmaul aus dem Gehäuse (25) bis an das Kupplungsmaul (27) erstreckt, während in FREI-Stellung das Sperrglied (2) sich drehen kann und ein Sichherausheben der Kupplungskugel ((11) aus dem Kupplungsmaul (27) ermöglicht,
- einen das Sperrglied (2) betätigenden Betätigungshebel (3) zum Bewegen des Sperrgliedes (2) aus der Sperrstellung in FREI-Stellung und zurück umfasst, wobei in Sperrstellung der Betätigungshebel (3) ein Wegdrehen des Sperrgliedes (2) von dem Kupplungsmaul verhindert, umfasst,
**dadurch gekennzeichnet, dass** das Sperrglied (2) dazu eingerichtet ist, den Betätigungshebel (3) in Verriegelungsstellung zurückzuführen wenn die Kupplungskugel (11) beim Sichherausheben aus dem Kupplungsmaul (27) das Sperrglied dreht.

2. Fanghaken nach Anspruch 1, **dadurch gekennzeichnet, dass** der Betätigungshebel (3) eine Gegenfläche (23) und das Sperrglied eine Sperrfläche (22) hat, und diese Flächen (23, 22) dazu eingerichtet sind, das Sperrglied (2) zu verriegeln wenn sich der Betätigungshebel (3) in Verriegelungsstellung befindet.

3. Fanghaken nach Anspruch 1 oder 2, **dadurch gekennzeichnet, dass** das Sperrglied (2) einen mit einem Hilfsnocken (21) des Betätigungshebels (3) zusammenwirkenden Führungsnocken (26) hat, der dazu dient, diesen (Hebel 3) zu Beginn der Rückführbewegung, bevor das Sperrglied (2) nach Aufnahme der Kupplungskugel (11) sich in die Nähe seiner Verriegelungsstellung gedreht hat, in Hochstellung zu halten.

4. Fanghaken nach Anspruch 3, **dadurch gekennzeichnet, dass** der Hilfsnocken (21) des Betätigungshebels in Kombination mit der Gegenfläche (23) ausgebildet ist.

5. Fanghaken nach irgendeinem der Ansprüche 1 bis 4, **dadurch gekennzeichnet, dass** das Sperrglied (2) einseitig so angelenkt ist, dass es sich infolge der Schwerkraftwirkung zu öffnen trachtet.

6. Fanghaken nach Anspruch 5, **dadurch gekennzeichnet, dass** sich das das Sperrglied (2) tragende Gelenk (4) am der Kupplungskugel (11) zugewandten Ende befindet, während sich das entgegengesetzte Ende asymmetrisch tief in das Gehäuse (25) hinein erstreckt.

7. Fanghaken nach Anspruch 5 oder 6, **dadurch gekennzeichnet, dass** die der Kupplungskugel (11) zugewandte Stützfläche (20) des Sperrgliedes (2) 60°-120°, am bevorzugtesten 80°-100° des Umfangs der Kupplungskugel (11) deckt.

## Revendications

1. Mâchoire d'attelage prévue pour atteler un appareil au tracteur à l'aide d'une boule d'attelage (11) ou similaire, laquelle mâchoire d'attelage comprend
- un corps (1), qui contient un logement (25) pour le mécanisme d'arrêt et une gorge d'attelage (27) disposée de sorte à recevoir en particulier ladite boule d'attelage (11) ;
- un arrêt (2) qui pivote autour une clavette fixe (4) dans le logement (25), l'extrémité duquel arrêt s'étend du logement (25) à la gorge d'attelage (27) pour verrouiller la boule d'attelage (11) dans la gorge d'attelage (27), tandis que dans la position libre l'arrêt (2) peut pivoter et permettre ainsi à la boule d'attelage (11) de se soulever de la gorge d'attelage (27) ;
- un levier de manoeuvre (3) qui manoeuvre l'arrêt (2) pour déplacer l'arrêt (2) de la position verrouillée à la position libre et vice versa, et dans laquelle position verrouillée le levier de manoeuvre (3) empêche l'arrêt (2) de sortir de la gorge d'attelage en pivotant ;
**caractérisée en ce que** l'arrêt (2) est disposé de sorte à replacer le levier de manoeuvre (3) dans la position verrouillée quand la boule d'attelage (11) pivote l'arrêt en sortant de la gorge d'attelage (27).

2. Mâchoire d'attelage selon la revendication 1, **caractérisée en ce que** le levier de manoeuvre (3) comprend une contre-surface (23) et l'arrêt (2) comprend une surface de verrouillage (22), qui sont disposées de sorte à verrouiller l'arrêt (2) quand le levier de manoeuvre (3) est dans la position verrouillée.

3. Mâchoire d'attelage selon la revendication 1 ou 2, **caractérisée en ce que** l'arrêt (2) comprend un lobe de guidage (26) en contact avec un lobe auxiliaire (21) du levier de manoeuvre (3) pour le maintenir élevé au début du mouvement de retour avant que l'arrêt (2) ne soit pivoté près de sa position verrouillée après avoir reçu la boule d'attelage (11).

4. Mâchoire d'attelage selon la revendication 3, **caractérisée en ce que** le lobe auxiliaire (21) du levier de manoeuvre est formé en relation avec la contre-surface (23).

5. Mâchoire d'attelage selon l'une quelconque des revendications 1 à 4, **caractérisée en ce que** l'arrêt (2) pivote de manière décentrée de sorte qu'il tend à s'ouvrir aidé par la gravité.

6. Mâchoire d'attelage selon la revendication 5, **caractérisée en ce que** le pivot (4) soutenant l'arrêt (2) se trouve à l'extrémité du côté de la boule d'attelage (11) tandis que l'extrémité opposée s'étend de manière asymétrique profondément dans le logement (25).

7. Mâchoire d'attelage selon la revendication 5 ou 6, **caractérisée en ce que** la surface de soutien (20) de l'arrêt (2) sur le côté de la boule d'attelage (11) couvre 60° à 120°, de préférence 80° à 100°, de la circonférence de la boule d'attelage (11).
